Europäisches Patentamt

(19) European Patent Office

Office européen des brevets

(11) Publication number: **0 081 488**
**B1**

(12) **EUROPEAN PATENT SPECIFICATION**

(45) Date of publication of patent specification: 02.09.87

(51) Int. Cl.⁴: **E 04 C 1/08,** E 04 C 3/30

(21) Application number: 81902067.8

(22) Date of filing: 19.06.81

(86) International application number:
PCT/US81/00723

(87) International publication number:
WO 82/04455 23.12.82 Gazette 82/30

(54) **ENERGY ABSORBING LOAD CARRYING STRUT AND METHOD OF PROVIDING SUCH A STRUT CAPABLE OF WITHSTANDING CYCLICAL LOADS EXCEEDING ITS YIELD STRENGTH.**

(43) Date of publication of application:
22.06.83 Bulletin 83/25

(45) Publication of the grant of the patent:
02.09.87 Bulletin 87/36

(84) Designated Contracting States:
AT CH DE FR GB LI LU NL SE

(56) References cited:
CH-A- 485 924
DE-A-1 141 431
DE-A-2 723 534
GB-A- 519 144
US-A-1 971 051
US-A-3 192 633
US-A-3 201 076
US-A-3 228 646
US-A-3 667 405
US-A-3 833 093
US-A-3 865 418
US-A-3 915 486
US-A-3 972 390
US-A-3 979 866
US-A-3 981 114

(73) Proprietor: KOLLER, Karl S.
2807 Estates Avenue
Pinole, CA 94564 (US)

(72) Inventor: KOLLER, Karl S.
2807 Estates Avenue
Pinole, CA 94564 (US)

(74) Representative: Weydert, Robert et al
OFFICE DENNEMEYER S.à.r.l. P.O. Box 1502
L-1015 Luxembourg (LU)

(56) References cited:
US-A-3 994 467
US-A-4 052 029
US-A-4 071 996
US-A-4 117 637
US-A-4 135 756

R.Park and T. Paulay "Reinforced Concrete
Structures, publ. by John Wiley & Sons, 1975,
pages 599+600

Courier Press, Leamington Spa, England.

## Description

The present invention relates to a load carrying strut capable of withstanding loads in excess of its yield strength and is particularly concerned with such a strut which may be incorporated into a structure to absorb the energy of extreme cyclical loads, without destruction of the strut or structure. The invention is especially concerned with a strut capable of withstanding, without destruction, the extreme cyclical loads which occur in buildings and other structures during earthquake.

The prior art teaches the use of energy absorbers in structures subject to cyclic earthquake forces. Examples of such absorbers may be found in US—A—3,833,093 and US—A—4,117,637. Both of these patents suggest the use of a plastically deformed material, such as lead, to absorb the cyclic energy imparted to a structure during earthquake conditions. The absorbers of these patents, however, are not in the form of simple and inexpensive struts adapted for incorporation as load bearing members in the manner of the strut of the present invention.

An example of a prior art compression strut having telescoping elements somewhat like those employed in the strut of the present invention may be found in US—A—4,052,029. In the strut of this patent, however, the compressible medium is crushed and is not suited for cyclic energy absorption thereafter.

A similar energy absorbing strut, according to the precharacterizing portion of claims 1, 5 and 11, is also described in DE—A—27 23 534 wherein a bending moment resisting sleeve is disposed in surrounding relationship with two bolsters and a column extending between the bolsters, the column comprising a filling material which may be a hydrostatic liquid, a gel, a thixotropic liquid, a solid granular or powdered material, a solid material having concrete-like characteristics or a plurality of individual rods.

Other efforts relating to energy absorbing shock absorbers may be found in the automotive art relating to vehicle structures capable of withstanding crash impacts. These structures, however, generally employ either springs which bounce back, or crushable elements which are not designed for cyclic loading or the maintenance of load carrying capacity after crushing.

An object of the present invention is to provide an energy absorbing load carrying strut capable of withstanding cyclical tension and/or compression loads exceeding its yield strength, to provide such a strut wherein the load is carried by a column which is so reinforced that it may withstand axial loads in excess of its yield strength, without buckling to provide an apparatus for reinforcing a column against bending moments imparted thereto as a result of eccentric axial loading, and in one aspect of the invention, to provide such a strut which may serve as a conduit and may withstand cyclical loads in excess of its yield strength, without rupturing.

According to one aspect of the invention the energy absorbing strut capable of withstanding cyclical tension and/or compression loads exceeding its yield strength comprises a malleable column, a bolster at either end of the column, said bolsters having a yield strength greater than that of the column and being secured to the ends of the column for imparting tension and compression loads thereto; and bending moment resisting means extending over the full length of the column and past the ends thereof and into engagement with said bolsters to resist bending moments imparted to the column due to eccentric loading thereof and transmit such moments to the bolsters, and is characterized in that the malleable column is tubular, the hollow interior thereof being in fluid communication with fluid passages in the bolsters such that the strut may serve as a fluid conduit reinforced by the bending moment resisting means against buckling.

According to another aspect of the invention the energy absorbing strut capable of withstanding cyclical tension and/or compression loads exceeding its yield strength comprises a malleable column, a bolster at either end of the column, said bolsters having a yield strength greater than that of the column and being secured to the ends of the column for imparting tension and compression loads thereto; and bending moment resisting means comprising a primary sleeve extending over the full length of the column in close encircling relationship thereto, said sleeve being engaged with both of said bolsters to transmit bending moments thereto being freely axially movable relative to at least one of the bolsters and being retained against lateral movement relative to the bolsters to resist bending moments imparted to the column due to eccentric loading thereof, and is characterized in that said bending moment resisting means further comprises a secondary sleeve extending around and closely encircling the primary sleeve, said secondary sleeve being freely axially movable relative to at least one of the bolsters and being retained against lateral movement relative to the bolsters.

According to still another aspect of the invention the energy absorbing strut capable of withstanding cyclical tension and/or compression loads exceeding its yield strength comprises a malleable column, a bolster at either end of the column, said bolsters having a yield strength greater than that of the column and being secured to the ends of the column for imparting tension and compression loads thereto; and bending moment resisting means comprising a primary sleeve extending over the full length of the column in close encircling relationship thereto, said sleeve being engaged with both of said bolsters to transmit bending moments thereto being freely axially movable relative to at least one of the bolsters and being retained against lateral movement relative to the bolsters to resist bending moments imparted to the column due to eccentric loading thereof, and is characterized in that the malleable column is tubular and that said bending moment resisting means comprises a secondary bending moment resisting member extending through and over the full length of the column so as to be closely encircled by the column, said secondary member being freely axially movable relative to at least one of the bolsters, and being retained against lateral movement relative to the bolsters.

Embodiments of the energy absorbing strut according to the claims will now be described with reference to the drawings, wherein:

Fig. 1 is an elevational view, in cross-section, illustrating a first embodiment of the strut wherein the load carrying column is of tubular cylindrical configuration and the bending moment resisting means comprises sleeves telescopically received around the column;

Fig. 2 is a cross-sectional view taken on the plane designated by line 2—2 of Fig. 1;

Fig. 3 is a cross-sectional view similar to Fig. 2, illustrating a second embodiment of the strut, wherein the load carrying column is of solid cylindrical configuration and the bending moment resisting means comprises sleeves telescopically received around the column;

Fig. 4 is a cross-sectional view similar to Fig. 2, illustrating a third embodiment of the strut, wherein the load carrying column is of solid rectangular configuration and the bending moment resisting means comprises rectangular sleeves telescopically received around the column;

Fig. 5 is a cross-sectional view similar to Fig. 2, illustrating a fourth embodiment of the strut, wherein the load carrying column is of solid triangular configuration and the bending moment resisting means comprises triangular sleeves telescopically received around the column;

Fig. 6 is a cross-sectional view similar to Fig. 2, illustrating a fifth embodiment of the strut, wherein the load carrying column is of solid pentagonal configuration and the bending moment resisting means comprises pentagonal sleeves telescopically received around the column;

Fig. 7 in an elevational view, in cross-section, illustrating a sixth embodiment of the strut wherein the load carrying column is of tubular cylindrical configuration and the bending moment resisting means comprises a single sleeve telescopically received around· the full length of the column;

Fig. 8 is an elevational view, in cross-section, illustrating a prototype embodiment of the strut wherein the load carrying column is of tubular cylindrical configuration and the bending moment resisting means comprises sleeves telescopically received around the column, with cylindrical spacers disposed between the sleeves;

Fig. 9 is a cross-sectional view taken on the plane designated by line 9—9 of Fig. 8;

Fig. 10 is a load/length diagram illustrating the results of a test conducted on the prototype strut of Fig. 8;

Fig. 11 is a cross-sectional elevational view illustrating a seventh embodiment of the strut, suitable for use as a conduit, wherein the column element of the strut is of tubular cylindrical configuration and the bending moment resisting means comprises a pair of sleeves telescopically received around the column element;

Fig. 12 is a perspective view illustrating the Fig. 11 strut incorpoarated into a conduit system;

Fig. 13 is a cross-sectional elevational view, illustrating an eighth embodiment of the strut, suitable for use as a conduit, wherein the column element of the strut is of tubular configuration and the bending -moment resisting means comprises a first pair of sleeves telescopically received interiorly of the column element and a second pair of sleeves telescopically received around the exterior of the column element;

Fig. 14 is an elevational view, in cross-section, illustrating a ninth embodiment of the strut, wherein the load carrying column is of tubular cylindrical configuration and the bending moment resisting means comprises a rod telescopically received interiorly of the column and a sleeve telescopically received exteriorly of the column; and

Fig. 15 is an elevational view, in cross-section, illustrating a tenth embodiment of the strut, wherein adjusting means is provided to selectively vary the composite length of the strut and the load carrying column is of tubular configuration and reinforced interiorly and exteriorly by bending moment resisting means comprising sleeves.

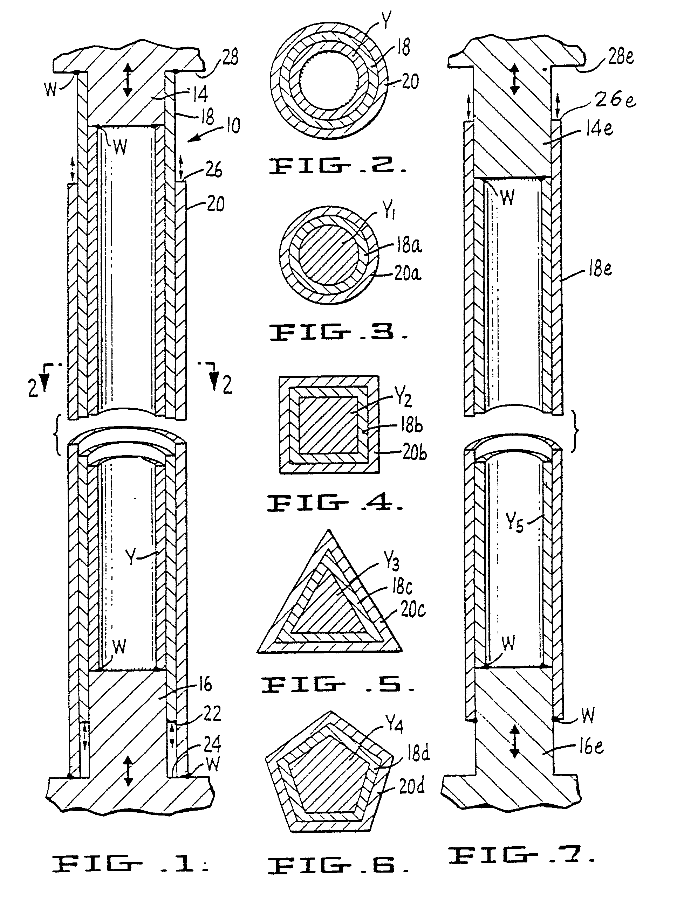

Referring now to Figs. 1 and 2, the strut is designated therein in its entirety by the numeral 10 and is shown as comprising the yieldable column Y of tubular, cylindrical configuration axially secured between a pair of end bolsters 14 and 16. The bolsters 14 and 16 are welded to the column Y by welds, designated W, whereby tension or compression forces may be imparted to the column by the bolsters. Bending moment resisting means are telescopically received around the column Y and comprise: a primary sleeve 18 extending around the full length of the column Y in concentric close encircling relationship thereto; and, a secondary sleeve 20 concentrically received around the primary sleeve 18 in close encircling relationship thereto. The sleeve 18 is fixed to the bolster 14 by a weld W and the distal end of the sleeve 18 is slidably received around the bolster 16 so that the end surface of the sleeve, designated 22, is spaced from the opposed end surface of the bolster 16, designated 24. The secondary sleeve 20 is fixed to the bolster 16 by weld W and has the distal end surface thereof, designated 26, spaced from the opposed end surface, designated 28, of the bolster 14.

The column Y and the bolsters 14 and 16 are so constructed that the column will yield in compression or tension prior to yielding or substantial deformation of the bolsters. In one example, the column Y is fabricated of ASTM A53, Grade B steel, and the bolsters are fabricated of ASTM A36 steel. The sleeves 18 and 20 may also be fabricated of ASTM A53, Grade B steel pipe.

It should be appreciated that, as a result of the spacing between the distal ends of the sleeves 18 and 20 and the end surfaces of the bolsters opposed thereto, the sleeves are not subject to substantial axial loading as the result of loads applied to the bolsters. The arrow lines applied to the bolsters in Fig. 1 are intended to depict axial tension and compression loads applied thereto. The small arrow lines at the distal ends of the sleeves 18 and 20 are intended to depict slidable movement of the sleeves relative to the bolsters upon axial loading of the bolsters and the yieldable column Y connected thereto.

The exact dimensions of the strut 10 may vary, depending upon the length and desired strut strength. In a typical example, the strut might have a length of approximately 2.7 m (9 feet between the end surfaces 24 and 28 of the bolsters and the yieldable column Y might be fabricated of two inch Schedule 40 pipe, ASTM A53, Grade B. Such pipe has an I.D. of 52.5 mm 2.067 inches) and an O.D. of 60.32 mm (2.375 inches). The sleeves 18 and 20 might also be fabricated of Schedule 40, ASTM A53, Grade B pipe, chosen so that the I.D. of the sleeve 18 is approximately 0.2387 mm (.094 inches) greater than the O.D. of the column Y and I.D. of the sleeve 20 is approximately 0.2387 mm (.094 inches) greater than the O.D. of the sleeve 18. The length of the sleeve 18 is chosen so that, during all conditions of loading, the sleeve extends over the full length of the column Y, while terminating sufficiently short of the end surface 24 of the bolster 16 so that it will not abut the bolster during compressive loading. Unlike the sleeve 18, it is permissible for the distal end of the sleeve 20 to terminate at such a position that the sleeve 20 does not extend over the full length of the column Y.

The relative inner and outer diameters of the column Y and the reinforcing sleeves 18 and 20 are chosen so that the sleeves will reinforce the column against lateral buckling resulting from eccentric loading of the column. These dimensions should also be such that they will accommodate lateral expansion of the column which may result from compression of the column beyond its yield strength.

The embodiment of Fig. 3 differs from that of Figs. 1 and 2 primarily in that the yieldable column, designated $Y_1$, is of solid cylindrical configuration rather than a tubular cylindrical configuration. The primary and secondary sleeves of the Fig. 3 embodiment are designated by the numbers 18a and 20a, respectively. Although not illustrated, it should be understood that the assembly of the elements in the Fig. 3 embodiment would correspond to that shown in Fig. 1 for the first embodiment.

The third, fourth and fifth embodiments, illustrated in Figs. 4, 5 and 6, respectively, differ from the second embodiment only in that the yieldable column and the primary and secondary reinforcing sleeves therearound are of polygonal, rather than circular, cross-section. As shown in Fig. 4, the column, designated $Y_2$, is of rectangular square configuration and the reinforcing sleeves, designated 18b and 20b are of a similar rectangular square configuration. As shown in Fig. 5, the column, designated $Y_3$, is of an equilateral triangular configuration and the reinforcing sleeves, designated 18c and 20c, of a similar configuration. The column shown in Fig. 6, designated $Y_4$, is of a pentagonal configuration and the reinforcing sleeves therearound, designated 18d and 20d, are of a similar configuration.

The assembly of the third, fourth and fifth embodiments would be the same as that shown in Fig. 1 for the first embodiment.

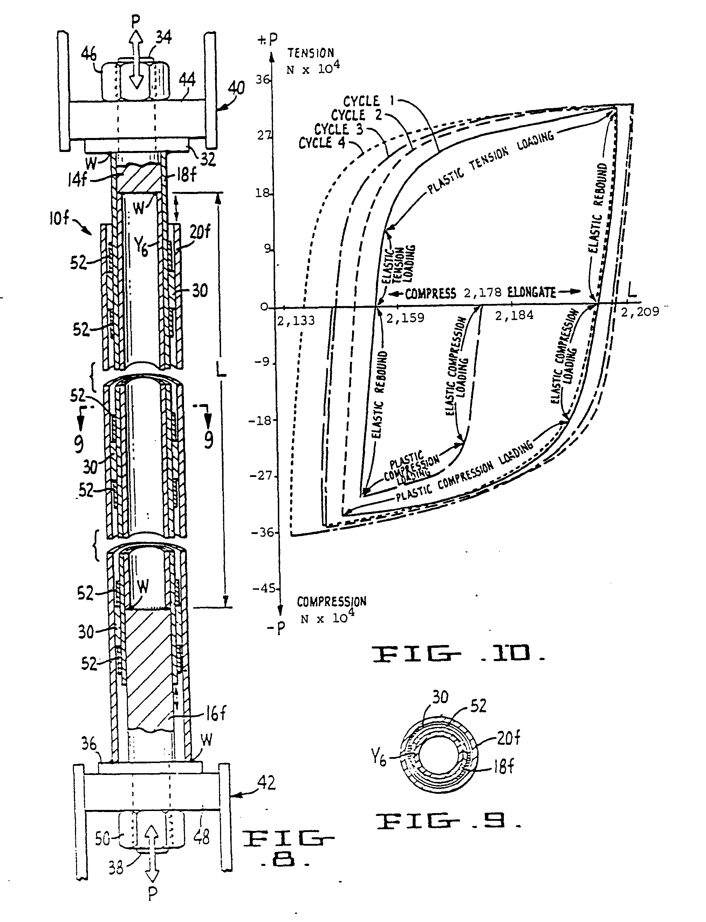

The sixth embodiment is shown in Fig. 7 and differs from the first embodiment primarily in that the bending moment resisting means comprises a single primary sleeve 18e. In the Fig. 7 embodiment, the yieldable column, designated $Y_5$, is of tubular cylindrical configuration similar to the column Y of the Fig. 1 embodiment. The bolsters of the Fig. 7 embodiment are designated by the numerals 14e and 16e and are secured to the column $Y_5$ by welds W. The primary sleeve 18c extends over the full length of the column $Y_5$ and is welded to the bolster 16c by a weld W. The distal end of the sleeve 18e extends slidably around the bolster 14e and is formed with end surface 26e spaced from an end surface 28e of the bolster 14e.

The arrow lines marked on the bolsters 14e and 16e of Fig. 7 depict the direction in which these bolsters move responsive to the application of compression or tension loads thereto. The arrow lines at the distal ends of the sleeve 18e depict movement of the sleeve relative to the bolster 14e responsive to loading of the bolster.

The operation of the Fig. 7 embodiment is essentially the same as that of the Fig. 1 embodiment, as will become more apparent from the subsequent discussion, with the exception that the bending moment resisting means comprises a single primary sleeve 18e, rather than a coupled pair of primary and secondary sleeves, such as the sleeves 18 and 20.

The prototype strut 10f of Figs. 8 and 9 differs from the embodiment of Figs. 1 and 2 primarily in that cylindrical spacers 30 are located between the primary sleeve, designated 18f, and the secondary sleeve, designated 20f. The yieldable column of the prototype embodiment is designated $Y_6$ and is shown secured between bolsters 14f and 16f by weld W. The bolster 14f includes an end plate 32 bearing against a shoulder on the bolster, and a threaded stud 34. The bolster 16f includes an end plate 36 bearing against a shoulder on the bolster, and a threaded stud 28 extending from the bolster.

As shown in Fig. 8, the strut is secured between a pair of loading fixtures, designated 40 and 42, respectively. The stud 34 extends through an opening provided therefor in a plate 44 forming part of the fixture 40. Plate 32 bears against the undersurface of the plate 44 and a nut 46 threadably received on the upper end of the stud 34 bears against the upper surface of the plate 44 to secure the bolster 14f against the separation from the fixture 40. The stud 38 extends through a plate 48 forming part of the fixture 42. The plate 36 bears against one side of the plate 48 and a nut 50 is threadably received on the stud 38 engaged with the plate 48 to secure the bolster 16f against separation relative to the fixture 42.

The primary sleeve 18f extends over the full length of the column $Y_6$ and is secured in place by a weld W between the proximate end of the sleeve and the plate 32. The distal end of the sleeve 18f is spaced from the plate 36 whereby the sleeve is free to move relative to the bolster 16f, as depicted by the arrow line in

4

Fig. 8. The secondary sleeve 20f is secured in place by a weld W between the proximate end of the sleeve and the plate 36. The distal end of the sleeve 20f is spaced from the plate 32 so that the sleeve may move relative to the primary sleeve 18f by retaining collars 52. These collars may simply comprise rings of tape adhered to the outside surface of the sleeve 18f. Spacers 30 have an outside diameter slightly less than, the inside diamter of the sleeve 20f to accommodate free longitudinal movement of the sleeve relative to the spacers.

The specifications on the prototype embodiment are as follows:

| Element | Specifications |
|---|---|
| $Y_6$ | 50.8 mm (2-inch) Schedule 40 pipe, ASTM A53, Grade B (52.5 mm [2.067 inches] I.D.; 60.32 mm [2.375 inches] O.D.), initial length 2.178 m [85-3/4 inches]. |
| 14f | 60.3 mm [2-3/8 inch] round bar, ASTM A242, extending 50.8 mm [2 inches] into the sleeve 18f, machined to 50.8 mm [2-inch] diameter over the length of the stud 34. |
| 16f | 60.3 mm [2-3/8 inch] round bar, ASTM A242, extending 203.2 mm [8 inches] into the sleeve 20f, machined to 50.8 mm [2-inch] diameter over the length of the stud 38. |
| 18f | 63.5 mm [2-1/2 inch] Schedule 40 pipe, ASTM A53, Grade B (62.71 mm [2.469 inches] I.D.; 73.2 mm [2.875 inches] O.D.), length 2.355 m [92-3/4 inches]. |
| 20f | 88.9 mm [3-1/2 inch] Schedule 40 pipe, ASTM A53, Grade B (90.11 mm [3.548 inches] I.D.; 101.6 mm [4.000 inches] O.D.), length 2.343 m [92-1/4 inches]. |
| 30 | 87.37 mm [3.44 inches] O.D. spacers machined from 76.2 mm [3-inch] Schedule 40 pipe (77.92 mm [3.068 inches] I.D.), ASTM A53, Grade B, 50.8 mm [2 inches] long, spaced from one another by approximately 914.4 mm [36 inches]. |
| 32 & 36 | Steel plate 19.05 mm [3/4 inch] by 139.7 mm [5-1/2 inch] square, ASTM A36. |
| 44 & 48 | 50.8 mm [2-inch] by 1.77.8 mm [7-inch] square steel plate, ASTM A36. |
| 46 & 50 | 50.8 mm [2-inch] heavy hex nut. |

Fig. 10 shows a load-length diagram illustrating the results of a test conducted on the prototype of Figs. 8 and 9. As there shown, the strut was initially progressively subjected to a compressive load of approximately 308,000 N [68,000 lbs.] and then run through four cycles of tension and compression loads. The relatively straight line segments at the beginning of the initial compression load and the beginning of each of the successive tension and compression loads illustrate the resilient deformation of the yieldable column which takes place upon initial loading. The curved lines extending from these relatively straight line segments show plastic deformation of the yieldable column. The first cycle is marked to show portions of the diagram which depict elastic loading, plastic loading, and rebound unloading.

From the Fig. 10 diagram, it will be seen that the strut maintains its load carrying capacity, even when loaded beyond its yield point. Loading beyond the yield point in compression is facilitated by the bending moment resisting means provided by the primary and secondary sleeves. Because of the free condition of the distal ends of these sleeves, they are not subject to substantial axial loading as a result of loading of the strut. The primary and secondary sleeves receive some axial loading due to friction between the column and primary and secondary sleeve walls. This is evidenced by the compression load being higher than the tension load on each loading cycle in Fig. 10. Thus, the sleeves may serve to reinforce the column element against bending moments imparted thereto as the result of eccentric loading. Such reinforcement assures that the column will not buckle when loaded beyond its yield point in compression.

It should be appreciated that the primary retention sleeve extends over the full length of the yieldable column. This, together with the fixed connection between the sleeve and the bolster to one end of the column and the slidable connection between the sleeve and the bolster to the other end of the column, assures that the column will be restrained against buckling.

In the preferred embodiment, the clearance between the column and the primary reinforcing sleeve should be such that the column may not deviate substantially from the straight condition without engaging the sleeve. This is important to assure against buckling of the column in the event of its eccentric loading. The clearance between the primary and secondary sleeves should also be chosen so that the primary sleeve may not deviate substantially from the straight condition without contacting the secondary sleeve. In the prototpye embodiment, the spacers 30 are provided to limit the latter clearance, because the standard 63.5 mm [2-1/2 inch] and 88.9 mm [3-1/2 inch] Schedule 40 pipes used for the primary and secondary sleeves would allow more clearance than is desirable. In the prototype embodiment, the clearance between the column and the primary sleeve is the difference between the O.D. of the column and the I.D. of the sleeve (i.e., 62.7 mm [2.469 inches] minus 60.32 mm [2.375 inches]). This clearance has been found to be very satisfactory for the prototype strut under the tested load conditions. It is anticipated, however, that the clearance might vary, so long as its is maintained sufficiently large to permit relatively substantially unrestricted slidable movement between the respective reinforcing sleeves and the column and the primary reinforcing sleeve.

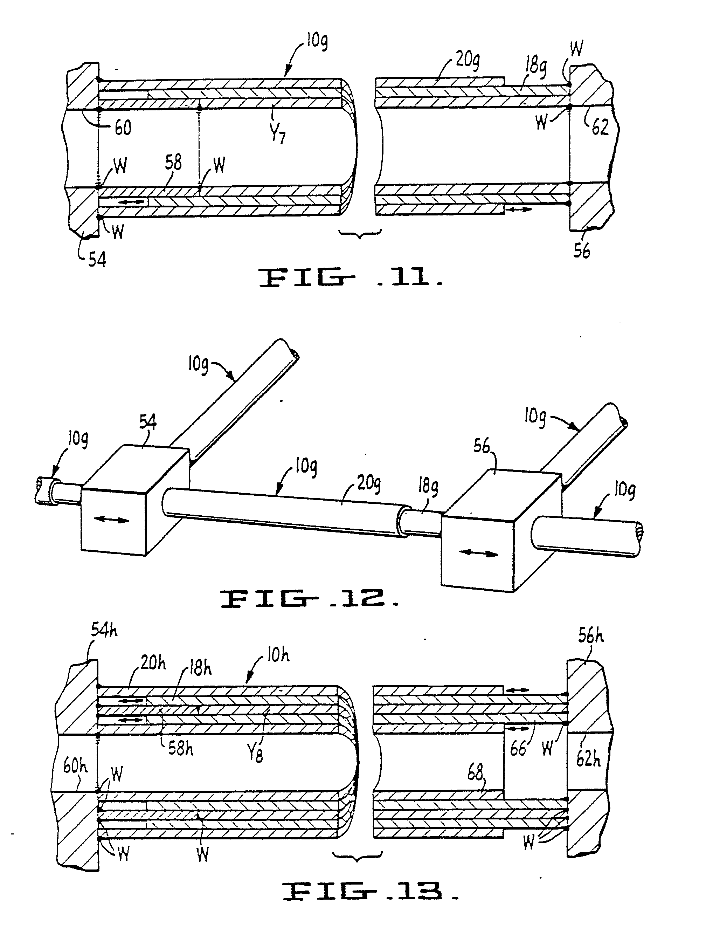

Referring now to Figs. 11 and 12, the embodiment of the strut shown therein, designated 10g, is designed primarily for use as a fluid conduit. Although this embodiment also has the ability to carry loads under tension or compression, its primary purpose is to provide a conduit which will not rupture or buckle in the event of being subjected to tension or compression forces exceeding its yield strength.

In the embodiment of Fig. 11, the yieldable column, designated $Y_7$, is of cylindrical tubular configuration and confined within primary and secondary sleeves 18g and 20g, respectively. The bolsters of the Figs. 11 and 12 embodiment take the form of conduit junction blocks 54 and 56 which would typically be anchored to foundations and, thus, subject to relative movement in the event of earthquakes. The block 54 is provided with an incompressible cylindrical extension 58 which is fixed at one end to the block and at the other end to the tubular column $Y_7$. Weld W may be used to secure the fixed connection between the extension 58 and the block and column. The block 56 is welded directly to the column $Y_7$ by a weld W. Passages 60 and 62 within the blocks 54 and 56 provide means whereby fluid may be conducted therethrough and into the conduit provided by the column $Y_7$. As an alternative or in addition to acting as a fluid conduit, the column $Y_7$ may also be used to house electrical conductors. In this envent, the conductors should be provided with sufficient slack or cylindrical slip joints to accommodate expansion or contraction in the event of compression or extension of the column $Y_7$ upon earthquake loading.

The sleeve 18g is welded at its proximate end to the block 56 and at its distal end extends slidably over the extension 58 in spaced relationship to the block 54. The sleeve 20g is welded at its proximate end to block 54 and extends slidably around the sleeve 18g so as to have its distal end in spaced relationship to the block 56. Thus, the sleeves 18g and 20g function to reinforce the column $Y_7$ against bending moments in a manner similar to the primary and secondary sleeves of the aforedescribed embodiments.

Referring now to Fig. 13, therein is illustrated another embodiment ideally suited for use as a conduit. The Fig. 13 embodiment differs from that of Figs. 11 and 12 only in that it is provided with internal reinforcing sleeves, in addition to the external sleeves. The yieldable column of the Fig. 13 embodiment is designated $Y_8$ and the various elements of the embodiment corresponding to those of the Figs. 11 and 12 embodiment are designated by like numerals, followed by the subscript "h", as follows: strut 10h; primary sleeve 18h; secondary sleeve 20h; junction blocks 54h and 56h; extension 58h and passages 60h and 62h.

The internal reinforcing sleeves of the Fig. 13 embodiment comprise a primary internal sleeve 66 and a seondary internal sleeve 68. The primary sleeve is welded at its proximate end to the bolster 56h and extends over the full length of the column $Y_8$ slidably past the extension 58h to a distal end spaced from the bolster 54h. The secondary internal sleeve 68 is welded at its proximate end to the bolster 54h and extends slidably over the internal surface of the sleeve 66 to a distal end spaced from the bolster 56h. Thus, it will be seen that the primary and secondary internal sleeves reinforce the column $Y_8$ against internal buckling as a result of bending moments in a manner similar to that that the primary and secondary external reinforcing sleeves reinforce the column against external buckling. The resulting structure is extremely buckle resistant.

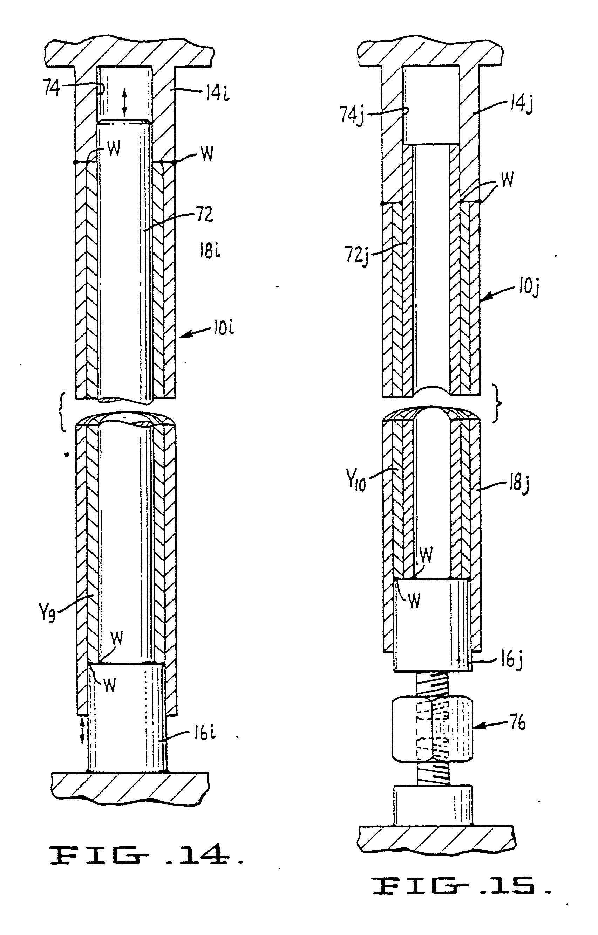

Fig. 14 shows a strut 10i having a yieldable column $Y_9$ reinforced internally and externally by bending moment resisting means extending over the full length of the column. Internal reinforcement is provided by a rod 72 extending through the column $Y_9$ and external reinforcement is provided by a primary sleeve 18i extending around the column. The column $Y_9$ is secured between a pair of load imparting bolsters 14i and 16i welded thereto by welds W so that both tension and compression forces may be imparted to the column. The rod 72 extends slidably through the column $Y_9$ slidably into a cavity 74 provided therefor in the bolster 14i. The distal end of the rod 72 is spaced from the end of the cavity to permit substantially unrestricted movement of the rod relative to the bolster 14i during loading of the column. The primary sleeve 18i is welded to the bolster 14i at weld W and extends at its distal end slidably around the bolster 16i. The distal end of the sleeve 18i is spaced from the end surface fo the bolster 16i opposed thereto to permit the sleeve to move freely relative to the bolster during loading of the column $Y_9$.

The strut 10i operates in essentially the same manner as that of the aforedescribed embodiments. Yieldable column $Y_9$ is fabricated of a malleable material, such as steel, and operates in essentially the same manner depicted in the diagram of Fig. 10. Rod 72 and sleeve 18i laterally restrain the column, while not being subject to substantial axial loads to reinforce the column against bending moments which may be imparted thereto due to eccentric loading.

The strut of Fig. 15, designated 10j, is of essentially the same construction as the Fig. 14 strut, with the exception that the internal reinforcing rod 72j is tubular and the bolster 16j is provided with a turnbuckle mechanism 76 to selectively vary the composite length of the strut. The yieldable column of the Fig. 15 embodiment is designated $Y_{10}$ and is shown captured between a bolster 14j and the bolster 16j. A primary retention sleeve 18j extends slidably around the full length of the column $Y_{10}$ from a welded connection with the bolster 14j to a slidable disposition relative to the bolster 16j. The proximate end of the rod 72j is welded to the bolster 16j and the distal end of the rod extends slidably within a cavity 74j formed in the bolster 14j.

**0 081 488**

The operation of the Fig. 15 embodiment is essentially the same as the aforedescribed embodiments, and particularly that of Fig. 14. The turnbuckle mechanism 76 enables the length of the strut 10j to be selectively varied to adjust the initial length of the strut and readjust the length of the strut, should it be shortened or lengthened as the result of a loading of the column 72j beyond its yield point. The latter type of adjustment enables a structure within which the strut is incorporated to be restored to original length after loading beyond the yield strength of the column $Y_{10}$, as might occur during an earthquake.

While preferred embodiments of the invention have been illustrated and described, it should be understood that the invention is not intended to be limited to the specifics of these embodiments, but is defined by the terms of accompanying claims. It should also be appreciated that the operation depicted by the load/length diagram of Fig. 10 is typical of that which could be expected from all embodiments and that the figures set forth in the diagram and the materials and dimensions set forth in the foregoing specification are for purposes of example only.

**Claims**

1. An energy absorbing strut capable of withstanding cyclical tension and/or compression loads exceeding its yield strength, said strut comprising a malleable column ($Y_7$; $Y_8$), a bolster (54, 56; 54h, 56h) at either end of the column, said bolsters having a yield strength greater than that of the column and being secured to the ends of the column for imparting tension and compression loads thereto; and bending moment resisting means extending over the full length of the column and past the ends thereof and into engagement with said bolsters to resist bending moments imparted to the column due to eccentric loading thereof and transmit such moments to the bolsters, characterized in that the malleable column ($Y_7$; $Y_8$) is tubular, the hollow interior thereof being in fluid communication with fluid passages (60, 62; 60h, 62h) in the bolsters (54, 56; 54h, 56h) such that the strut may serve as a fluid conduit reinforced by the bending moment resisting means against buckling.

2. An energy absorbing strut according to claim 1, characterized in that the bending moment resisting means comprises a primary sleeve (18g; 18h) extending over the full length of the column ($Y_7$; $Y_8$) in close encircling relationship thereto, said sleeve being engaged with both of said bolsters (54, 56; 54h, 56h) to transmit bending moments thereto, being freely axially movable relative to at least one of the bolsters, and being restrained against lateral movement relative to the bolsters.

3. An energy absorbing strut according to claim 2, characterized in that the bending moment resisting means further comprises a secondary sleeve (20g; 20h) extending around and in close encircling relationship to the primary sleeve (18g, 18h), said secondary sleeve being freely axially movable relative to at least one of the bolsters (54, 56; 54h, 56h); and being restrained against lateral movement relative to the bolsters.

4. An energy absorbing strut according to claim 2, characterized in that at least one secondary sleeve (66, 68) extends through and over the full length of the column ($Y_8$) so as to be closely encircled by the column, said at least one secondary sleeve (66, 68) being freely axially movable relative to at least one of the bolsters (54h, 56h) and being restrained against lateral movement relative to the bolsters.

5. An energy absorbing strut capable of withstanding cyclical tension and/or compression loads exceeding its yield strength, said strut comprising a malleable column (Y, $Y_1$—$Y_4$, $Y_6$—$Y_8$), a bolster (16, 16e, 16f, 54, 54h, 18, 18e, 18f, 56, 56h) at either end of the column, said bolsters having a yield strength greater than that of the column and being secured to the ends of the column for imparting tension and compression loads thereto; and bending moment resisting means comprising a primary sleeve (18—18d, 18f, 18g, 18h) extending over the full length of the column in close encircling relationship thereto, said sleeve being engaged with both of said bolsters to transmit bending moments thereto being freely axially movable relative to at least one of the bolsters and being restrained against lateral movement relative to the bolsters to resist bending moments imparted to the column due to eccentric loading thereof, characterized in that said bending moment resisting means further comprises a secondary sleeve (20—20d, 20f, 20g, 20h) extending around and closely encircling the primary sleeve, said secondary sleeve being freely axially movable relative to at least one of the bolsters and being restrained against lateral movement relative to the bolsters.

6. An energy absorbing strut according to claim 5, characterized in that said primary sleeve (18—18d, 18f, 18g, 18h) is fixedly connected at one end thereof to one of the bolsters and the other end of the sleeve being slidably received about the other of the bolsters; and that the secondary sleeve (20—20d, 20f, 20g, 20h) has one end thereof fixedly connected to said other bolster, and said secondary sleeve being slidably received about said primary sleeve.

7. An energy absorbing strut according to claim 5 or 6, characterized in that spacers (30) are provided between the primary and secondary sleeves (18f, 20f) to reduce friction resistance therebetween.

8. An energy absorbing strut according to any one of claims 5 to 7, characterized by means (34, 40, 46; 38, 42, 50) to selectively vary the composite length of the column ($Y_6$) and bolsters (14f, 16f) whereby said length may be adjusted and restored after elongation or compression of the strut as a result of yielding of the column.

9. An energy absorbing strut according to any one of claims 5 to 8, characterized in that the column ($Y_7$,

7

$Y_8$) is hollow and is in fluid communication with fluid passages (60, 62, 60h, 62h) in the bolsters (54, 56, 54h, 56h) such that the strut may serve as a fluid conduit.

10. An energy absorbing strut according to any one of claims 5 to 9, characterized in that the column ($Y_8$) is hollow, and a further pair of primary and secondary sleeves (66, 68), one fixedly secured to one of the bolsters (60h, 62h) and the other fixedly secured to the other bolster, are received in the hollow interior of the column ($Y_8$), with the primary sleeve (66) of said further pair closely encircled by the column ($Y_8$) and the secondary sleeve (68) of said further pair closely encircled by the primary sleeve (66) of said further pair.

11. An energy absorbing strut capable of withstanding cyclical tension and/or compression loads exceeding its yield strength, said strut comprising a malleable column ($Y_9$, $Y_{10}$), a bolster (14i, 16i, 14j, 16j) at either end of the column, said bolsters having a yield strength greater than that of the column and being secured to the ends of the column for imparting tension and compression loads thereto; and bending moment resisting means comprising a primary sleeve (18i, 18j) extending over the full length of the column in close encircling relationship thereto, said sleeve being engaged with both of said bolsters to transmit bending moments thereto being freely axially movable relative to at least one of the bolsters and being restrained against lateral movement relative to the bolsters to resist bending moments imparted to the column due to eccentric loading thereof, characterized in that the malleable column ($Y_9$, $Y_{10}$) is tubular and that said bending moment resisting means comprises a secondary bending moment resisting member (72, 72j) extending through and over the full length of the column ($Y_9$, $Y_{10}$) so as to be closely encircled by the column, said secondary member (72, 72j) being freely axially movable relative to at least one of the bolsters, said being restrained against lateral movement relative to the bolsters.

12. An energy absorbing strut according to claim 11, characterized in that the secondary bending moment resisting member (72) is a rod.

13. An energy absorbing strut according to claim 11, characterized in that the secondary bending moment resisting member (72j) is tubular.

14. An energy absorbing strut according to any one of claims 11 to 13, characterized in that one of the bolsters (16j) has means (76) to selectively vary the composite length of the strut.

**Patentansprüche**

1. Energieaufnehmende Strebe, die in der Lage ist, zyklische Zug- und/oder Druckbelastungen auszuhalten, welche ihre Streckgrenze überschreiten, wobei die Strebe eine kaltverformbare Säule ($Y_7$; $Y_8$) aufweist, einen Halter (54, 56; 54h, 56h) an jedem Ende der Säule, wobei die Halter eine Streckgrenze haben, die größer ist als die der Säule, und an den Enden der Säule befestigt sind, um Zug- und Druckkräft auf diese ausüben zu können; und eine Beigemomentaufnahmeeinrichtung, die sich über die volle Länge der Säule und an deren Enden vorbei und bis in Berührung mit den Haltern erstreckt, um Biegemomente aufzunehmen, welche auf die Säule aufgrund von exzentrischer Belastung derselben ausgeübt werden, und diese Momente auf die Halter zu übertragen, dadurch gekennzeichnet, daß die katverformbare Säule ($Y_7$; $Y_8$) rohrförmig ist, daß der innere Hohlraum derselben in Fluidverbindung mit Fluidkanälen (60, 62; 60h, 62h) in den Haltern (54, 56; 54h, 56h) steht, so daß die Strebe als Fluidleitung dienen kann, die durch die Beigemomentaufnahmeeinrichtung gegen Knickung verstärkt ist.

2. Energieaufnehmende Strebe nach Anspruch 1, dadurch gekennzeichnet, daß die Biegemomentaufnahmeeinrichtung eine primäre Hülse (18g, 18h) aufweist, die sich üher die volle Länge der Säule ($Y_7$; $Y_8$) erstreckt und diese dabei eng umschließt, wobei die Hülse mit beiden Haltern (54, 56; 54h, 56h) in Berührung ist, um Biegemomente auf diese zu übertragen, relativ zu wenigstens einem der Halter frei axial bewegbar ist und relativ zu den Haltern gegen Querbewegung festgehalten ist.

3. Energieaufnehmende Strebe nach Anspruch 2, dadurch gekennzeichnet, daß die Biegemomentaufnahmeeinrichtung weiter eine sekundäre Hülse (20g, 20h) aufweist, die sich um die primäre Hülse (18g, 18h) erstreckt und diese dabei eng umschließt, wobei die sekundäre Hülse relativ zu wenigstens einem der Halter (54, 56; 54h, 56h) frei axial bewegbar ist und relativ zu den Haltern gegen Querbewegung festgehalten ist.

4. Energieaufnehmende Strebe nach Anspruch 2, dadurch gekennzeichnet, daß sich wenigstens eine sekundäre Hülse (66, 68) durch die Säule ($Y_8$) und über die volle Länge der Säule erstreckt, so daß sie die Säule eng umschließt, wobei die wenigstens eine sekundäre Hülse (66, 68) relativ zu wenigstens einer der Halter (54h, 56h) frei axial bewegbar ist und relativ zu den Haltern gegen Querbewegung festgehalten ist.

5. Energieaufnehmende Strebe, die in der Lage ist, zyklische Zug- und/oder Druckbelastungen auszuhalten welche ihre Streckgrenze überschreiten, wobei die Strebe eine kaltverformbare Säule (Y, $Y_1$—$Y_4$, $Y_6$—$Y_8$) aufweist, einen Halter (16, 16e, 16f, 54, 54h, 18, 18e, 18f, 56, 56h) an jedem Ende der Säule, wobei die Halter eine Streckgrenze haben, die größer ist als die der Säule, und an den Enden der Säule befestigt sind, um Zug- und Druckkräfte auf diese ausüben zu können; und eine Beigemomentaufnahmeeinrichtung mit einer primären Hülse (18—18d, 18f, 18g, 18h), welche sich über die volle Länge der Säule erstreckt und diese eng umschließt, wobei die Hülse mit beiden Haltern in Berührung ist, um Biegemomente auf diese zu übertragen, relative zu wenigstens einem der Halter frei axial bewegbar ist und relativ zu den Haltern gegen Querbewegung festgehalten ist, um Biegemomente aufzunehmen, die auf die Säule aufgrund von exzentrischer Belastung derselben ausgeübt werden, dadurch gekennzeichnet, daß die Biegemomentaufnahmeeinrichtung weiter eine sekundäre Hülse (20—20d, 20f, 20g, 20h) aufweist, die sich um die primäre Hülse erstreckt und diese eng umschließt, wobei die sekundäre Hülse relativ zu wenigstens einem der Halter frei axial bewegbar ist und relativ zu den Haltern gegen Querbewegung festgehalten ist.

6. Energieaufnehmende Strebe nach Anspruch 5, dadurch gekennzeichnet, daß die primäre Hülse (18—18d, 18f, 18g, 18h) an ihren einen Ende an einem der Halter starr befestigt ist und an ihrem anderen Ende um den anderen Halter verschiebbar aufgenommen ist, und daß die sekundäre Hülse (20—20d, 20f, 20g, 20h) mit einem Ende an dem anderen Halter starr befestigt ist, und daß die sekundäre Hülse um die primäre Hülse verschiebbar aufgenommen ist.

7. Energieaufnehmende Strebe nach Anspruch 5 oder 6, dadurch gekennzeichnet, daß Distanzstüke (30) zwischen der primären und der sekundären Hülse (18f, 20f) vorgesehen sind, um den Reibungswiderstand zwischen denselben zu reduzieren.

8. Energieaufnehmende Strebe nach einem der Ansprüche 5 bis 7, gekennzeichnet durch eine Einrichtung (34, 40, 46; 38, 42, 50) zum wahlweisen Verändern der Gesamtlänge der Säule ($Y_6$) und der Halter (14f, 16f), wodurch die Länge eingestellt und nach Verlängerung oder Zusammendrückung der Strebe als Ergebnis eines Nachgebens der Säule nachgestellt werden kann.

9. Energieaufnehmende Hülse nach einem der Ansprüche 5 bis 8, dadurch gekennzeichnet, daß die Säule ($Y_7$, Y8) hohl ist und mit Fluidkanälen (60, 62, 60h, 62h) in den Haltern (54, 56, 54h, 56h) in Fluidverbindung steht, so daß die Strebe als Fluidleitung dienen kann.

10. Energieaufnehmende Strebe nach einem der Ansprüche 5 bis 9, dadurch gekennzeichnet, daß die Säule ($Y_8$) hohl ist und daß ein weiteres Hülsenpaar, das aus einer primären und einer sekundären Hülse (66, 68) besteht, von denen eine an einem der Halter (60h, 62h) und die andere an dem anderen Halter starr befestigt ist, in dem inneren Hohlraum der Säule ($Y_8$) aufgenommen ist, wobei die primäre Hülse (66) des weiteren Paares durch die säule ($Y_8$) eng umschlossen ist und wobei die sekundäre Hülse (68) des weiteren Paares durch die primäre Hülse (66) des weiteren Paares eng umschlossen ist.

11. Energieaufnehmende Strebe, die in der Lage ist, zyklische Zug- und/oder Druckbelastungen auszuhalten, welche ihre Streckgrenze überschreiten, wobei die Strebe eine kaltverformbare Säule ($Y_9$, $Y_{10}$) aufweist, einen Halter (14i, 16i, 14j, 16j) an jedem Ende der Säule, wobei die Halter eine Streckgrenze haben, die größer ist als die der Säule, und an den Enden der Säle befestigt sind, um Zug- und Druckkräfte auf diese ausüben zu können; und eine Biegemomentaufnahmeeinrichtung, die eine primäre Hülse (18i, 18j) umfaßt, welche sich über die volle Länge der Säule erstreckt und diese engumschließt, wobei die Hülse mit beiden Haltern in Berührung ist, um Biegemomente auf diese übertragen zu können, relativ zu wenigstens einem der Halter frei axial bewegbar ist und relativ zu den Haltern gegen Querbewegung festgehalten ist, um Biegemomente aufzunehmen, die auf die Säule aufgrund einer exzentrische Belastung derselben übertragen werden, dadurch gekennzeichnet, daß die kaltverformbare Säule ($Y_9$, $Y_{10}$) rohrförmig ist und daß die Biegemomentaufnahmeeinrichtung ein sekundäres Biegemomentaufnahmeteil (72, 72j) aufweist, das sich durch die Säule ($Y_9$, $Y_{10}$) und über die volle Länge der Säule erstreckt, so daß es durch die Säule eng umschlossen ist, wobei das sekundäre Teil (72, 72j) relativ zu wenigstens einem der Halter frei axial bewegbar ist und relativ zu den Haltern gegen Querbewegung festgehalten ist.

12. Energieaufnehmende Strebe nach Anspruch 11, dadurch gekennzeichnet, daß das sekundäre Biegemomentaufnahmeteil (72) eine Stange ist.

13. Energieaufnehmende Strebe nach Anspruch 11, dadurch gekennzeichnet, daß das sekundäre Biegemontaufnahmeteil (72j) rohrförmig ist.

14. Energieaufnehmende Strebe nach einem der Ansprüche 11 bis 13, dadurch gekennzeichnet, daß einer der Halter (16j) eine Einrichtung (76) zum wahlweisen Verändern der Gesamtlänge der Strebe hat.

## Revendications

1. Etai absorbeur d'énergie capable de résister à des charges cycliques de traction et/ou de compression qui dépassent sa limite apparente d'élasticité, comprenant une colonne malléable ($Y_7$; $Y_8$), un sabot (54, 56; 54h, 56h) à chacune des extrémités de la colonne, ces sabots ayant une limite apparente d'élasticité plus élevée que celle de la colonne et étant fixés aux extrémités de la colonne de façon à transmettre à celle-ci des charges de traction et de compression, et des moyens résistant au couple de flexion qui s'étendent sur toute la longueur de la colonne et au-delà des extrémités de celle-ci, en prise avec les sabots, pour résister aux couples de flexion exercés sur la colonne en conséquence de l'application de charges excentriques à celle-ci et transmettre de tels couples aux sabots, caractérisé en ce que la colonne malléable ($Y_7$; $Y_8$) est tubulaire, sa cavité intérieure étant en communication de fluide avec des passages de fluide (60, 62; 60h, 62h) formés dans les sabots (54, 56; 54h, 56h), de telle manière que l'étai puisse servir de conduit de fluide, renforcé à l'égard du flambage par les moyens résistant au couple de flexion.

2. Etai absorbeur d'énergie selon la revendication 1, caractérisé en ce que les moyens résistant au couple de flexion comprennent un fourreau primaire (18g; 18h) qui s'étend sur toute la longueur de la colonne ($Y_7$; $Y_8$) en rapport d'engainement étroit avec celle-ci, ce fourreau étant en prise avec les deux sabots (54, 56; 54h, 56h) de façon à leur transmettre les couples de flexion, étant mobile librement en direction axiale par rapport à l'un au moins des sabots et étant maintenu sans possibilté de mouvement latéral par rapport aux sabots.

**0 081 488**

3. Etai absorbeur d'énergie selon la revendication 2, caractérisé en ce que les moyens résistant au couple de flexion comprennent en outre un fourreau secondaire (20g; 20h) qui s'étend autour du fourreau primaire (18g, 18h) et l'engaine étroitement, ce fourreau secondaire étant librement mobile en direction axiale par rapport à l'un au moins des sabots (54, 56; 54h, 56h) et étant maintenu sans possibilité de mouvement latéral par rapport aux sabots.

4. Etai absorbeur d'énergie selon la revendication 2, caractérisé en ce qu'au moins un fourreau secondaire (66, 68) s'étend à travers la colonne ($Y_8$) et sur toute la longueur de celle-ci de façon à être engainé étroitement par la colonne, ce fourreau secondaire (66, 68) Étant librement mobile en direction axiale par rapport à l'un au moins des sabots (54h, 56h) et étant maintenu sans possibilité de mouvement latéral par rapport aux sabots.

5. Etai absorbeur d'énergie capable de résister à des charges cycliques de traction et/ou de compression qui dépassent sa limite apparent d'élasticité, comprenant une colonne malléable (Y, $Y_1$—$Y_4$, $Y_6$—$Y_8$), un sabot (16, 16e, 16f, 54, 54h, 18, 18e, 18f, 56, 56h) a chacune des extrémités de la colonne, ces sabots ayant une limite apparente d'élasticité plus élevée que celle de la colonne et étant fixés aux extrémités de la colonne de façon à transmettre à celle-ci des charges de traction et de compression, et des moyens résistant au couple de flexion comprenant un fourreau primaire (18—18d, 18f, 18g, 18h) qui s'étend sur toute la longueur de la colonne en rapport d'engainement étroit avec celle-ci, ce fourreau étant en prise avec les deux sabots de façon à leur transmettre des couples de flexion, étant librement mobile en direction axiale par rapport à l'un au moins des sabots et étant maintenu sans possibilité de mouvement latéral par rapport aux sabots, pour résister aux couples de flexion exercés sur la colonne en conséquence de l'application de charges excentriques à celleci, caractérisé en que lesdits moyens résistant au couple de flexion comprennent en outre un fourreau secondaire (20—20d, 20f, 20g, 20h) qui s'étend autour du fourreau primaire en l'engainant étroitement, ce fourreau secondaire étant librement mobile en direction axiale par rapport à l'un au moins des sabots et étant maintenu sans possibilité de mouvement latéral par rapport aux sabots.

6. Etai absorbeur d'énergie selon la revendication 5, caractérisé en ce que fourreau primaire (18—18d, 18f, 18g, 18h) est fixé rigidement par l'une de ses extrémités à l'un des sabots, l'autre extrémité du fourreau étant disposée à glissement autour de l'autre des sabots, et en ce que le fourreau secondaire (20—20d, 20f, 20g, 20h) est fixé rigidement par l'une de ses extrémités audit autre sabot, le fourreau secondaire étant disposé à glissement autour du fourreau primaire.

7. Etai absorbeur d'énergie selon la revendication 5 ou 6, caractérisé en ce que des pièces d'écartement (30) sont disposées entre les fourreaux primaire et secondaire (18f, 20f) afin de réduire la résistance par friction entre ceux-ci.

8. Etai absorbeur d'énergie selon l'une quelconque des revendications 5 à 7, caractérisé par des moyens (34, 40, 46; 38, 42, 50) permettant de faire varier sélectivement la longueur totale de la colonne ($Y_6$) et des sabots (14f, 16f) de telle manière que cette longueur puisse être réglée et être rétablie après un allongement ou une compression de l'étai en conséquence d'une déformation de la colonne.

9. Etai absorbeur d'énergie selon l'une quelconque des revendications 5 à 8, caractérisé en ce que la colonne ($Y_7$, $Y_8$) est creuse et est en communicaiton de fluide avec des passages de fluide (60, 62, 60h, 62h) formés dans les sabots (54, 56, 54h, 56h), de telle manière que l'étai puisse servir de conduit de fliude.

10. Etai absorbeur d'énergie selon l'une quelconque des revendications 5 à 9, caractérisé en ce que la colonne ($Y_8$) est creuse et qu'une autre paire de fourreaux primaire et secondaire (66, 68), dont l'un est fixé rigidement à l'un des sabots (60h, 62h) et l'autre est fixé rigidement à l'autre sabot, est reçue dans la cavité intérieure de la colonne ($Y_8$), le fourreau primaire (66) de cette autre paire étant engainé étroitement par la colonne ($Y_8$) et le fourreau secondaire (68) de cette autre paire étant engainé étroitement par le fourreau primaire (66) de cette autre paire.

11. Etai absorbeur d'énergie capable de résister à des charges cycliques de traction et/ou de compression qui dépassent sa limite apparent d'élasticité, comprenant une colonne malléable ($Y_9$, $Y_{10}$), un sabot (14i, 16i, 14j, 16j) à chacune des extrémités de la colonne, ces sabots ayant une limite apparente d'élasticité plus élevée que celle de la colonne et étant fixés aux extrémités de la colonne de façon à transmettre à celle-ci des charges de traction et de compression, et des moyens résistant au couple de flexion comprenant un fourreau primaire (18i, 18j) qui s'étend sur toute la longueur de la colonne et l'entaine étroitement, ce fourreau étant en prise avec les sabots de manière à leur transmettre les couples de flexion, étant librement mobile en direction axiale par rapport à l'un au moins des sabots et étant maintenu sans possibilité de mouvement latéral par rapport aux sabots, pour résister aux couples de flexion exercés sur la colonne en conséquence de l'application de charges excentriques à celle-ci, caractérisé en ce que la colonne malléable ($Y_9$, $Y_{10}$) est tubulaire et en ce que les moyens résistant au couple de flexion comprennent un élément secondaire résistant au couple de flexion (72, 72j) qui s'étend à travers la colonne ($Y_9$, $Y_{10}$) et sur toute la longueur de celle-ci de mainière à être étroitement engainé par la colonne, cet élément secondaire (72, 72j) étant librement mobile en direction axiale par rapport à l'un au moins des sabots et étant maintenu sans possibilité de mouvement latéral par rapport aux sabots.

12. Etai absorbeur d'énergie selon la revendication 11, caractérisé en ce que l'élément secondaire résistant au couple de flexion (72) est une barre.

13. Etai absorbeur d'énergie selon la revendication 11, caractérisé en ce que l'élément secondaire résistant au couple de flexion (72) est tubulaire.

**0 081 488**

14. Etai absorbeur d'énergie selon l'une quelconque des revendications 11 à 13, caractérisé en ce que l'un des sabots (16j) comporte des moyens permettant de faire varier sélectivement la longueur totale de l'étai.

FIG.1.

FIG.2.

FIG.3.

FIG.4.

FIG.5.

FIG.6.

FIG.7.

FIG.10.

FIG.9.

FIG.8.

FIG. 11.

FIG. 12.

FIG. 13.

FIG.14.

FIG.15.